# FASCICULE DE BREVET EUROPEEN

(11) **EP 4 070 008 B1**
(45) Date de publication et mention de la délivrance du brevet: **19.06.2024**
(21) Numéro de dépôt: 20812094.9
(22) Date de dépôt: 01.12.2020
(51) Int. Cl.: F17D 1/04

(54) **POSTE DE FLUIDE COMPRENANT UN SYSTÈME DE DÉTENTE, NOTAMMENT POUR UNE INSTALLATION DE GAZ COMPRENANT UN SYSTÈME DE GÉNÉRATION D'ÉLECTRICITÉ**
FLÜSSIGKEITSANLAGE MIT EINEM EXPANSIONSSYSTEM, INSBESONDERE FÜR EINE GASANLAGE MIT EINEM STROMERZEUGUNGSSYSTEM
FLUID PLANT COMPRISING AN EXPANSION SYSTEM, IN PARTICULAR FOR A GAS INSTALLATION COMPRISING AN ELECTRICITY GENERATING SYSTEM

(30) Priorité: 06.12.2019 FR 1913887
(43) Date de publication de la demande: 12.10.2022
(73) Titulaire: Terega, 64000 Pau (FR)
(72) Inventeur: BOULEY, Eric, Maurice, Marcel, 64320 IDRON (FR); CARRERE, David, Alexandre, Jocelyn, 64290 GAN (FR); CUREA, Octavian, Flavius, 64600 ANGLET (FR)
(74) Mandataire: Casalonga
(86) Numéro de dépôt international: PCT/EP2020/084038
(87) Numéro de publication internationale: WO 2021/110636

(56) Documents cités:
- WO-A1-2010/142698
- US-A- 4 677 827
- US-A- 5 628 191
- US-A1- 2008 016 879
- US-B2- 9 885 239

## Description

La présente invention concerne le domaine des installations de gaz, et particulièrement de gaz naturel, ainsi que la production d'énergie électrique dans une telle installation de gaz naturel.

Afin de transporter le gaz naturel en grandes quantités et sur de longues distances, le gaz naturel est comprimé à haute pression, de l'ordre de 50 à 80 bars.

Les normes de distribution du gaz naturel imposent de réduire la pression du gaz à une basse pression de l'ordre de 4 à 15 bars, par exemple égal à 4 bars avant la livraison aux clients.

Ainsi, les installations de gaz comprennent un réseau de transport du gaz naturel haute pression et des postes dits « de livraison » comprenant des systèmes de détente du gaz naturel en vue de la distribution du gaz naturel vers un réseau de distribution de gaz basse pression.

L'installation de gaz comprend généralement, en aval du système de détente de gaz, un dispositif de comptage permettant de comptabiliser la quantité de gaz fournie au réseau de distribution de gaz.

Un tel dispositif de comptage nécessite une alimentation électrique qui n'est pas toujours présente, notamment sur des installations de gaz isolées de tout réseau électrique.

Il est possible de prévoir une alimentation électrique du dispositif de comptage en utilisant des panneaux solaires ou encore des éoliennes. Toutefois, de tels systèmes de génération d'électricité sont particulièrement coûteux et sensibles au vol. On peut également se référer au document US 2008/016879 - A1 qui décrit un moteur de détente de gaz de type à piston configuré pour récupérer de l'énergie potentielle lorsque la pression de gaz est abaissée.

On connaît le document US 2007 163 256 qui décrit une installation permettant de réduire la pression dans une canalisation de gaz naturel et comprenant un convertisseur de débit et un générateur d'électricité relié mécaniquement audit convertisseur pour transformer l'énergie résultant de la chute de pression en énergie électrique.

On connait également le document FR 3 045 726 qui décrit un dispositif d'extraction et de valorisation de l'énergie de détente d'un gaz comprenant une turbomachine comportant un arbre libre en rotation pour réaliser une détente, ledit arbre étant reliée à une génératrice électrique configurée pour convertir l'énergie mécanique de rotation produite par la turbomachine en électricité.

Toutefois, de tels systèmes sont particulièrement difficiles à mettre en oeuvre et particulièrement coûteux. De plus, de tels systèmes sont intrusifs et génèrent des pertes de charges, une baisse significative de la température, ainsi que des nuisances sonores. Leur maintenance est également relativement une maintenance difficile,

Il existe donc un besoin d'alimenter en électricité les différents systèmes d'une installation de fluide, notamment de gaz, et ce de manière autonome, insensible au vol, et sans émettre des émissions de CO2 et de gaz naturel CH4.

L'invention a donc pour objet un poste de fluide, notamment pour une installation de fluide, comprenant un système de détente capable de convertir le fluide haute pression en fluide basse pression.

Le poste de fluide peut être un poste de livraison de fluide ou un autre poste de sectionnement pourvu d'un système de détente.

Par ailleurs, le fluide peut être n'importe quel gaz, de préférence du gaz naturel.

Le poste de fluide comprend un système de génération d'électricité disposé en parallèle du système de détente et comprenant un vérin à double effet relié en amont du système de détente et en aval dudit système de détente et comprenant deux orifices d'alimentation alimentés alternativement par le fluide haute pression.

Le système de génération d'électricité comprend en outre un système hydraulique relié audit vérin double effet et configuré pour transformer l'énergie mécanique de translation dudit vérin en une énergie mécanique de rotation et
une génératrice électrique reliée au système hydraulique et configurée pour convertir l'énergie mécanique de rotation du système hydraulique en une énergie électrique.

Par vérin à double effet, on entend un vérin à deux directions de travail.

Ainsi, le système de génération d'électricité est strictement dépendant de la pression du fluide, par exemple du gaz naturel, et ne rejette donc pas de CO2 et de gaz naturel CH4 dans l'atmosphère.

Grâce au système de génération d'électricité en utilisant uniquement la pression du gaz, on génère de l'électricité d'au moins 30W, par exemple 100W, et ce, sans polluer l'environnement.

Avantageusement, le poste de fluide comprend une unité électronique de commande configurée pour alimenter en fluide le vérin à double effet. Ladite unité électronique de commande étant alimentée en courant continu par la génératrice électrique.

Le poste de fluide comprend, de préférence, un accumulateur d'énergie électrique, tel que par exemple une batterie électrique, monté en aval de la génératrice électrique et configuré pour stocker le courant continu issu de ladite génératrice. Ainsi, avant le démarrage du système de génération d'électricité, l'électricité est transmise par l'accumulateur d'énergie qui est ensuite rechargé en continu par la génératrice électrique.

Selon un mode de réalisation, le poste de fluide comprend deux électrovannes à trois voies commandées par l'unité électronique de commande pour alimenter alternativement en fluide haute pression les deux orifices d'alimentation du vérin à double effet.

Selon un autre mode de réalisation, le poste de fluide comprend au moins un distributeur à voies multiples mobile entre une position d'alimentation en fluide haute pression du vérin à double effet prélevé en amont du système de détente et une position d'injection du fluide basse pression sortant dudit vérin en aval du système de détente. Ladite position du distributeur est commandée par l'unité électronique de commande pour alimenter alternativement en fluide haute pression les deux orifices d'alimentation du vérin à double effet.

Selon un autre mode de réalisation, le poste de fluide comprend deux distributeurs à voies multiples mobiles entre une position d'alimentation en fluide haute pression du vérin à double effet prélevé en amont du système de détente et une position d'injection du fluide basse pression sortant dudit vérin en aval du système de détente. Lesdites positions des distributeurs sont commandées par l'unité électronique de commande pour alimenter alternativement en fluide haute pression les deux orifices d'alimentation du vérin à double effet.

Les distributeurs sont, par exemple, de type 3/2.

Par exemple, le vérin à double effet comprend un carter de vérin cylindrique délimitant un volume interne et un piston mobile en translation dans ledit carter et séparant le volume interne en deux chambres isolées, ledit piston étant solidaire d'une tige sensiblement rigide reliée au système hydraulique afin de transmettre l'énergie mécanique du piston audit système hydraulique.

Avantageusement, le système de détente est configuré pour permettre le maintien de la pression en aval dudit système à une valeur de seuil, par exemple inférieure ou égale 5 bars. La valeur de seuil est définie de manière à être suffisante pour permettre au système de détente d'encaisser une éventuelle surpression.

Par exemple, le poste de fluide comprend un dispositif de comptage disposé en aval du système de détente et en amont d'un réseau de distribution de fluide basse pression, ledit dispositif de comptage étant alimenté en courant continu par le système de génération d'électricité.

Par exemple, le poste de fluide comprend une conduite haute pression reliant le système de détente au réseau de transport et une conduite basse pression reliant le système de détente au dispositif de comptage.

Le système de génération d'électricité est relié à la conduite haute pression par laquelle est prélevé du fluide haute pression pour être injecté dans le vérin à double effet et à la conduite basse pression par laquelle du fluide basse pression provenant du vérin est injecté dans ladite conduite principale basse pression.

Le poste de fluide est par exemple un poste de livraison de gaz naturel.

Selon un second aspect, l'invention concerne une installation de gaz naturel comprenant un réseau de transport de gaz naturel à haute pression, par exemple à une pression de l'ordre de 40 à 80 bars, un réseau de distribution recevant un gaz naturel à basse pression, par exemple de l'ordre de 4 à 15 bars, de préférence inférieure à 5 bars, et destiné à alimenter des infrastructures industrielles, et au moins un poste de livraison tel que décrit précédemment reliant le réseau de transport au réseau de distribution.

D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] illustre schématiquement une installation de gaz comprenant un système de génération d'électricité selon un premier mode de réalisation de l'invention ;
[Fig 2A] est une vue de détails d'un système de génération d'électricité pour une installation de gaz de la figure 1 selon un deuxième mode de réalisation, dans une première position ; et
[Fig 2B] illustre le système de génération d'électricité de la figure 2A dans une deuxième position.

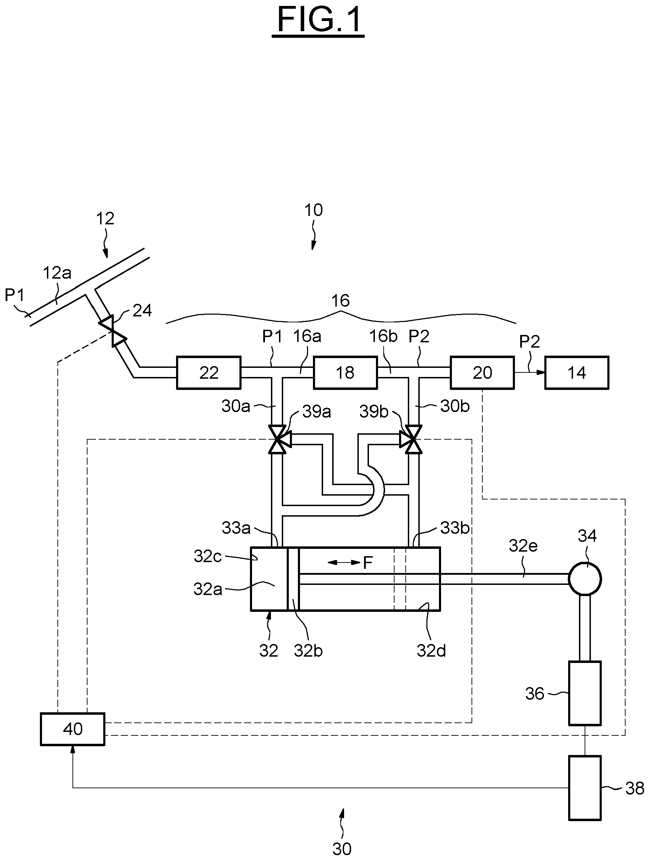

Telle qu'illustré sur la figure 1, une installation de fluide, notamment de gaz naturel, référencée 10 dans son ensemble comprend un réseau de transport 12 dudit gaz naturel comprenant une pluralité de conduites principales 12a capable de contenir un gaz comprimé à haute pression de l'ordre de 40 à 80 bars.

L'installation de gaz naturel 10 comprend en outre un réseau de distribution 14 destiné à alimenter des infrastructures industrielles (non représentées) en vue de la distribution du gaz naturel à une basse pression P2, de l'ordre de 4 à 15 bars, de préférence inférieure à 5bars.

Le réseau de distribution 14 est relié au réseau de transport 12 par un poste de gaz 16, par exemple un poste de livraison de gaz, configuré pour détendre le gaz haute pression issu du réseau de transport de sorte à obtenir un gaz basse pression.

A cet effet, chaque poste de livraison 16 comprend un système 18 de détente du gaz naturel et, en aval dudit système de détente 18, un dispositif de comptage 20 permettant de comptabiliser la quantité de gaz basse pression fournie au réseau de distribution de gaz 14.

Le poste de livraison 16 comprend une conduite haute pression 16a reliant le système de détente 18 au réseau de transport 12 et une conduite basse pression 16b reliant le système de détente 18 au dispositif de comptage 20.

L'installation de gaz 10 peut comprendre, de manière nullement limitative, un filtre 22 disposé en amont du système de détente 18 et une vanne 24 disposée en amont dudit filtre 22 configurée pour isoler la conduite principale 12a du réseau de transport 12 et du poste de livraison 16.

Chaque poste de livraison 16 comprend un système 30 de génération d'électricité disposé en parallèle du système de détente 18.

Le système de génération d'électricité 30 comprend un vérin 32 dit « à double effet » comprenant un carter de vérin cylindrique 32a délimitant un volume interne et un piston 32b mobile en translation dans ledit carter 32a et séparant le volume interne en deux chambres isolées 32c, 32d.

L'étanchéité entre les chambres 32c, 32d et le piston est réalisée par des joints d'étanchéité (non représentés).

Le piston 32b est solidaire d'une tige rigide 32e reliée à un système hydraulique 34 afin de transmettre l'énergie mécanique du piston audit système hydraulique 34. Le système hydraulique 34 est configuré pour transformer l'énergie mécanique de translation du piston 32b en une énergie mécanique de rotation.

L'huile mise sous pression par l'intermédiaire du piston 32b entraîne un moteur hydraulique (non représenté) couplé à la génératrice à courant continu 36. Le sens de rotation dudit moteur hydraulique est inchangé quelque soit le sens de translation du vérin pneumatique grâce à l'utilisation de clapets anti-retour (non représentés).

Le vecteur hydraulique, dont la pression est la même que celle du gaz, permet de garantir un éloignement de la génératrice électrique par rapport au vérin, via l'utilisation, par exemple, de raccordements ou flexibles simples. Ceci permet de s'affranchir des contraintes des normes Atmosphères explosives, d'acronyme ATEX qui imposent des dispositions constructives entre le réseau de gaz et l'électricité.

Le système hydraulique 34 transmet à son tour l'énergie mécanique de rotation créée à une génératrice électrique 36 reliée à une batterie électrique 38.

Par vérin à double effet, on entend un vérin à deux directions de travail. Ainsi, le carter de vérin 32a comprend deux orifices 33a, 33b d'alimentation et la pression est appliquée alternativement de chaque côté du piston 32b, ce qui engendre un mouvement de translation dudit piston suivant la flèche F illustrée sur la figure 1.

Tel qu'illustré sur la figure 1, le système 30 de génération d'électricité comprend une conduite secondaire haute pression 30a par laquelle est prélevé du gaz haute pression pour être amené dans le vérin à double effet 32 et une conduite secondaire basse pression 30b par laquelle du gaz basse pression est injecté dans la conduite principale basse pression 16b.

Une première électrovanne à trois voies 39a est disposée sur la conduite secondaire haute pression 30a afin de distribuer le gaz haute pression à l'un ou l'autre des orifices 33a, 33b du vérin.

Une deuxième électrovanne à trois voies 39b est disposée sur la conduite secondaire basse pression 30b afin d'injecter du gaz basse pression dans la conduite principale basse pression 16b.

Le système de détente 18 est configuré pour permettre la régulation de la pression P2 en aval et son maintien à une valeur de seuil, par exemple égale à 5 bars.

Le système de génération d'électricité 30 comprend en outre une unité de commande électronique 40 ou un automate configuré pour commander la position des électrovannes 39a et 39b. Par ailleurs, l'énergie électrique provenant de la batterie 38 permet d'alimenter le dispositif de comptage 20 et de télétransmission du site.

Le système de génération d'électricité n'impacte pas la qualité du gaz du côté de la basse pression, ni le volume de gaz. En effet, le volume de gaz réinjecté est relativement faible et ne génère pas ou peu de surpression en aval du système de détente.

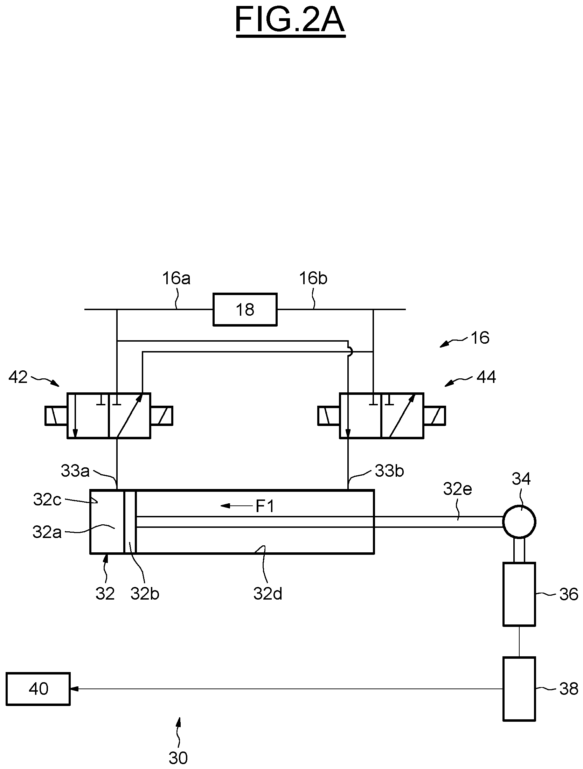

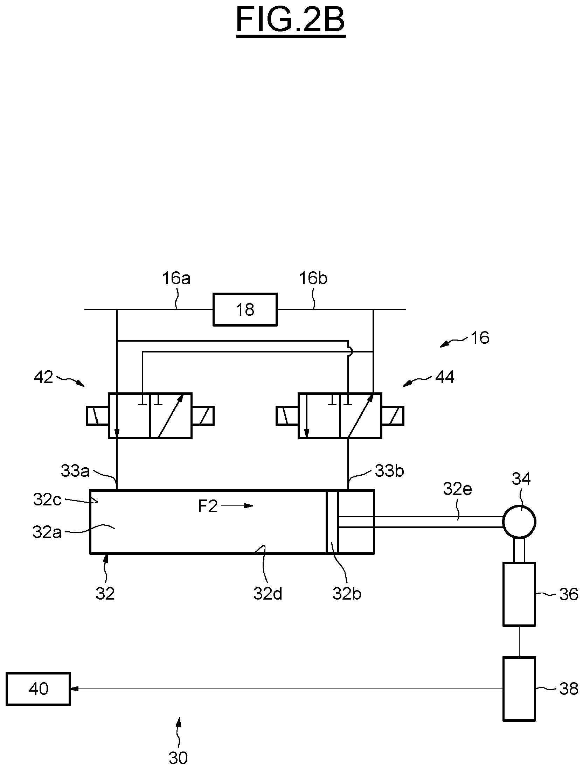

Le mode de réalisation illustré sur les figures 2A et 2B diffère du mode de réalisation de la figure 1 uniquement par le fait que l'alimentation du vérin à double effet 32 se fait par deux distributeurs à voies multiples 42, 44. En variante, on pourrait prévoir qu'un seul distributeur pour alimenter alternativement les deux orifices d'alimentation 33a, 33b du vérin 32.

Tel qu'illustré, les distributeurs 42, 44 sont de type 3/2 et sont mobiles entre une position Position 1 d'alimentation en gaz haute pression et une position Position2 d'injection de gaz basse pression.

La figure 2A représente le premier distributeur 42 dans la position basse pression, c'est-à-dire qu'il ne laisse pas passer du gaz haute pression vers le vérin mais qu'il transmet le gaz basse pression issu du premier orifice 33a d'alimentation vers la conduite principale basse pression 16b. Sur cette figure, le deuxième distributeur 44 est dans la position haute pression, c'est-à-dire qu'il transmet du gaz haute pression à travers le deuxième orifice 33b du vérin 32 et qu'il ne laisse pas passer le gaz basse pression. Ainsi, le piston 32b est mis en mouvement de translation selon la flèche F1 vers le fond du carter 32a de vérin.

La figure 2B représente le premier distributeur 42 dans la position haute pression, c'est-à-dire qu'il transmet du gaz haute pression à travers le premier orifice 33a du vérin 32 et qu'il ne laisse pas passer le gaz basse pression.

Sur cette figure, le deuxième distributeur 44 est dans la position basse pression, c'est-à-dire qu'il ne laisse pas passer du gaz haute pression vers le vérin mais qu'il transmet le gaz basse pression issu du deuxième orifice 33b d'alimentation vers la conduite principale basse pression 16b. Ainsi, le piston 32b est mis en mouvement de translation selon la flèche F2 vers l'entrée du carter 32a de vérin.

A titre d'exemple non limitatifs, les distributeurs 42, 44 sont commandés par l'unité électronique de commande 40. En variante, les distributeurs 42, 44 pourraient être commandés mécaniquement par un dispositif d'assemblage (non représenté) entre le vérin 32 et lesdits distributeurs 42, 44.

Grâce au vérin à double effet, on obtient un mouvement de translation continu, ce qui permet de fournir une énergie mécanique récupérable par une génératrice à courant continu.

Ainsi, on peut alimenter en énergie électrique le dispositif de comptage, ainsi que d'autres éléments présents sur le poste de livraison, de manière autonome insensible au vol, et sans émettre des émissions de CO2 et de gaz naturel CH4.

## Revendications

1. Poste (16) de fluide, notamment pour une installation de fluide (10), comprenant une conduite haute pression (16a), un système (18) de détente capable de convertir le fluide haute pression en gaz naturel basse pression, et relié à la conduite haute pression (16a) et une conduite basse pression (16b) reliée en aval du système de détente (18), poste qui comprend un système (30) de génération d'électricité disposé en parallèle du système de détente (18) et comprenant :
un vérin à double effet (32) relié en amont du système de détente (18) et en aval dudit système de détente (18) et comprenant deux orifices d'alimentation (33a, 33b) alimentés alternativement par le fluide haute pression ;
un système hydraulique (34) relié audit vérin double effet (32) et configuré pour transformer l'énergie mécanique de translation dudit vérin en une énergie mécanique de rotation ; et
une génératrice électrique (36) reliée au système hydraulique (34) et configurée pour convertir l'énergie mécanique de rotation en énergie électrique, le système (30) de génération d'électricité comprend une conduite secondaire haute pression (30a) reliée à la conduite haute pression (16a) et par laquelle est prélevé du fluide haute pression pour être amené dans le vérin (32) par l'intermédiaire d'un des orifices d'alimentation (33a, 33b) et une conduite secondaire basse pression (30b) reliée à la conduite basse pression (16b) et par laquelle du fluide basse pression sortant de l'autre des orifices d'alimentation (33a, 33b) du vérin (32) est injecté en aval du système de détente (18), et en ce qu'il comprend :
- une unité électronique de commande (40) configurée pour alimenter en fluide haute pression le vérin à double effet (32), ladite unité électronique de commande (40) étant alimentée en courant continu par la génératrice électrique (36), et
- deux électrovannes (39a, 39b) à trois voies commandées par l'unité électronique de commande (40) ou au moins un distributeur à voies multiples (42, 44) pour alimenter alternativement en fluide haute pression les deux orifices d'alimentation (33a, 33b) du vérin à double effet (32).

2. Poste de fluide selon la revendication 1, comprenant un accumulateur d'énergie électrique (38) monté en aval de la génératrice électrique (36) et configuré pour stocker le courant continu issu de ladite génératrice.

3. Poste de fluide selon la revendication 1 ou 2, comprenant deux électrovannes (39a, 39b) à trois voies commandées par l'unité électronique de commande (40) pour alimenter alternativement en fluide haute pression les deux orifices d'alimentation (33a, 33b) du vérin à double effet (32).

4. Poste de fluide selon l'une quelconque des revendications 1 à 3, comprenant au moins un distributeur à voies multiples (42, 44) mobile entre une position (Position1) d'alimentation en fluide haute pression du vérin à double effet (32) prélevé en amont du système de détente (18) et une position (Position2) d'injection du fluide basse pression sortant dudit vérin (32) en aval du système de détente (18), ladite position du distributeur (42, 44) étant commandée par l'unité électronique de commande (40) pour alimenter alternativement en fluide haute pression les deux orifices d'alimentation (33a, 33b) du vérin à double effet (32).

5. Poste de fluide selon la revendication 4, comprenant deux distributeurs à voies multiples (42, 44).

6. Poste de fluide selon l'une quelconque des revendications précédentes, dans lequel le vérin à double effet (32) comprend un carter de vérin cylindrique (32a) délimitant un volume interne et un piston (32b) mobile en translation dans ledit carter (32b) et séparant le volume interne en deux chambres isolées (32c, 32d), ledit piston (32b) étant solidaire d'une tige sensiblement rigide (32e) reliée au système hydraulique (34).

7. Poste de fluide selon l'une quelconque des revendications précédentes, dans lequel le système de détente (18) est configuré pour permettre le maintien de la pression (P2) en aval à une valeur de seuil.

8. Poste de fluide selon l'une quelconque des revendications précédentes, comprenant un dispositif de comptage (20) disposé en aval du système (18) de détente et en amont d'un réseau de distribution de fluide basse pressions (14), ledit dispositif de comptage (20) étant alimenté en courant continu par le système (30) de génération d'électricité.

9. Poste de fluide selon la revendication 8, comprenant une conduite haute pression (16a) reliant le système de détente (18) au réseau de transport (12) et une conduite basse pression (16b) reliant le système de détente (18) au dispositif de comptage (20).

10. Poste de fluide selon la revendication 9, dans lequel le système (30) de génération d'électricité est relié à la conduite haute pression (16a) et à la conduite basse pression (16b).

11. Poste de fluide selon l'une quelconque des revendications précédentes, dans lequel ledit poste est un poste de livraison de gaz naturel.

12. Installation de gaz naturel (10) comprenant un réseau de transport (12) de gaz naturel à haute pression, un réseau de distribution (14) recevant un gaz naturel à basse pression et au moins un poste de gaz naturel (16) selon l'une quelconque des revendications précédentes reliant le réseau de transport (12) au réseau de distribution (14).

## Patentansprüche

1. Flüssigkeitsanlage (16) insbesondere für eine Flüssigkeitsinstallation (10), umfassend eine Hochdruckleitung (16a), ein Expansionssystem (18), das in der Lage ist, die Hochdruckflüssigkeit in Erdgas mit niedrigem Druck umzuwandeln, und an die Hochdruckleitung (16a) angeschlossen ist, und eine Niederdruckleitung (16b), die stromabwärts des Expansionssystems (18) angeschlossen ist, wobei die Anlage ein System (30) zum Erzeugen von Strom umfasst, das parallel zum Expansionssystem (18) angeordnet ist, und umfasst:
einen doppeltwirkenden Zylinder (32), der stromaufwärts des Expansionssystems (18) und stromabwärts des Expansionssystems (18) angeschlossen ist, und zwei Versorgungsöffnungen (33a, 33b) umfasst, die abwechselnd mit der Hochdruckflüssigkeit versorgt werden;
ein Hydrauliksystem (34), das an den doppeltwirkenden Zylinder (32) angeschlossen ist und konfiguriert ist, um die mechanische Vorschubenergie des Zylinders in eine mechanische Rotationsenergie umzuwandeln; und
einen Stromgenerator (36), der an das Hydrauliksystem (34) angeschlossen ist und konfiguriert ist, um die mechanische Rotationsenergie in elektrische Energie umzuwandeln, wobei das System (30) zum Erzeugen von Strom eine sekundäre Hochdruckleitung (30a), die an die Hochdruckleitung (16a) angeschlossen ist, und über die Hochdruckflüssigkeit entnommen wird, um durch eine der Versorgungsöffnungen (33a, 33b) dem Zylinder (32) zugeführt zu werden, und eine sekundäre Niederdruckleitung (30b) umfasst, die an die Niederdruckleitung (16b) angeschlossen ist, und durch die Niederdruckflüssigkeit, die aus der anderen der Versorgungsöffnungen (33a, 33b) des Zylinders (32) austritt, stromabwärts des Expansionssystems (18) injiziert wird, und dadurch, dass sie umfasst:
- eine elektronische Steuereinheit (40), die konfiguriert ist, um den doppeltwirkenden Zylinder (32) mit Hochdruckflüssigkeit zu versorgen, wobei die elektronische Steuereinheit (40) durch den Stromgenerator (36) mit Gleichstrom versorgt wird, und
- zwei 3-Wege-Magnetventile (39a, 39b), die von der elektronischen Steuereinheit (40) gesteuert werden, oder mindestens ein Mehrwegeventil (42, 44), um die beiden Versorgungsöffnungen (33a, 33b) des doppeltwirkenden Zylinders (32) abwechselnd mit Hochdruckflüssigkeit zu versorgen.

2. Flüssigkeitsanlage nach Anspruch 1, umfassend einen elektrischen Energiespeicher (38), der stromabwärts des Stromgenerators (36) montiert ist und konfiguriert ist, um den aus dem Generator stammenden Gleichstrom zu speichern.

3. Flüssigkeitsanlage nach Anspruch 1 oder 2, umfassend zwei 3-Wege-Magnetventile (39a, 39b), die von der elektronischen Steuereinheit (40) gesteuert werden, um die beiden Versorgungsöffnungen (33a, 33b) des doppeltwirkenden Zylinders (32) abwechselnd mit Hochdruckflüssigkeit zu versorgen.

4. Flüssigkeitsanlage nach einem der Ansprüche 1 bis 3, umfassend mindestens ein Mehrwegeventil (42, 44), das zwischen einer Position (Position1) zur Versorgung des doppeltwirkenden Zylinders (32) mit Hochdruckflüssigkeit, die stromaufwärts des Expansionssystems (18) entnommen wird, und einer Position (Position2) zum Injizieren von Niederdruckflüssigkeit, die aus dem Zylinder (32) stromabwärts des Expansionssystems (18) austritt, beweglich ist, wobei die Position des Mehrwegeventils (42, 44) von der elektronischen Steuereinheit (40) gesteuert wird, um die beiden Versorgungsöffnungen (33a, 33b) des doppeltwirkenden Zylinders (32) abwechselnd mit Hochdruckflüssigkeit zu versorgen.

5. Flüssigkeitsanlage nach Anspruch 4, umfassend zwei Mehrwegeventile (42, 44).

6. Flüssigkeitsanlage nach einem der vorstehenden Ansprüche, wobei der doppeltwirkende Zylinder (32) ein zylindrisches Zylindergehäuse (32a), das ein Innenvolumen begrenzt, und einen vorschubbeweglichen Kolben (32b) in dem Gehäuse (32b) umfasst, und das Innenvolumen in zwei getrennte Kammern (32c, 32d) trennt, wobei der Kolben (32b) fest mit einer im Wesentlichen starren Stange (32e) verbunden ist, die an das Hydrauliksystem (34) angeschlossen ist.

7. Flüssigkeitsanlage nach einem der vorstehenden Ansprüche, wobei das Expansionssystem (18) konfiguriert ist, um die Beibehaltung des Drucks (P2) stromabwärts auf einem Schwellenwert zu ermöglichen.

8. Flüssigkeitsanlage nach einem der vorstehenden Ansprüche, umfassend eine Zählvorrichtung (20), die stromabwärts des Expansionssystems (18) und stromaufwärts eines Verteilungsnetzes für Niederdruckflüssigkeit (14) angeordnet ist, wobei die Zählvorrichtung (20) durch das System (30) zum Erzeugen von Strom mit Gleichstrom versorgt wird.

9. Flüssigkeitsanlage nach Anspruch 8, umfassend eine Hochdruckleitung (16a), die das Expansionssystem (18) an das Transportnetz (12) anschließt, und eine Niederdruckleitung (16b), die das Expansionssystem (18) an die Zählvorrichtung (20) anschließt.

10. Flüssigkeitsanlage nach Anspruch 9, wobei das System (30) zum Erzeugen von Strom an die Hochdruckleitung (16a) und an die Niederdruckleitung (16b) angeschlossen ist.

11. Flüssigkeitsanlage nach einem der vorstehenden Ansprüche, wobei die Anlage eine Erdgaslieferanlage ist.

12. Erdgasinstallation (10), umfassend ein Transportnetz (12) für Hochdruckerdgas, ein Verteilungsnetz (14), das ein Niederdruckerdgas aufnimmt, und mindestens eine Erdgasanlage (16) nach einem der vorstehenden Ansprüche, welche das Transportnetz (12) an das Verteilungsnetz (14) anschließt.

## Claims

1. A fluid plant (16), in particular for a fluid installation (10), comprising a high-pressure line (16a), an expansion system (18) capable of converting the high-pressure fluid into low-pressure natural gas, and connected to the high-pressure line (16a) and a low-pressure line (16b) connected downstream of the expansion system (18), **characterised in that** it comprises a electricity generating system (30) disposed in parallel with the expansion system (18) and comprising: a double-acting cylinder (32) connected upstream of the expansion system (18) and downstream of said expansion system (18) and comprising two supply ports (33a, 33b) alternately supplied by the high-pressure fluid; a hydraulic system (34) connected to said double-acting cylinder (32) and configured to transform the mechanical translational energy of said cylinder into a mechanical rotational energy; and an electric generator (36) connected to the hydraulic system (34) and configured to convert the mechanical rotational energy into electrical energy, the electricity generating system (30) comprises a secondary high-pressure line (30a) connected to the high-pressure line (16a) and through which the high-pressure fluid is taken to be fed into the cylinder (32) via one of the supply ports (33a, 33b) and a secondary low-pressure line (30b) connected to the low-pressure line (16b) and through which the low-pressure fluid exiting the other of the supply orifices (33a, 33b) of the cylinder (32) is injected downstream of the expansion system (18) and **in that** the fluid plant comprises:
an electronic control unit (40) configured to supply the high-pressure fluid to the double-acting cylinder (32), said electronic control unit (40) being supplied with direct current by the electric generator (36), and
two three-way solenoid valves (39a, 39b) controlled by the electronic control unit (40) or at least one multiway distribution valve (42, 44) to alternately supply the high-pressure fluid to the two supply ports (33a, 33b) of the double-acting cylinder (32).

2. The fluid plant according to claim 1, comprising an electrical energy accumulator (38) mounted downstream of the electric generator (36) and configured to store the direct current from said generator.

3. The fluid plant according to claim 1 or 2, comprising two three-way solenoid valves (39a, 39b) controlled by the electronic control unit (40) to alternately supply high-pressure fluid to the two supply ports (33a, 33b) of the double-acting cylinder (32).

4. The fluid plant according to any of claims 1 to 3, comprising at least one multiway distribution valve (42, 44) movable between a position (Position1) for supplying the double-acting cylinder (32) with high-pressure fluid taken upstream of the expansion system (18) and a position (Position2) for injecting the low-pressure fluid exiting said cylinder (32) downstream of the expansion system (18), said position of the distribution valve (42, 44) being controlled by the electronic control unit (40) to alternately supply high-pressure fluid to the two supply ports (33a, 33b) of the double-acting cylinder (32).

5. The fluid plant according to claim 4, comprising two multiway distribution valves (42, 44).

6. The fluid plant according to any of the preceding claims, wherein the double-acting cylinder (32) comprises a cylindrical cylinder casing (32a) delimiting an internal volume and a piston (32b) movable in translation in said casing (32b) and separating the internal volume into two isolated chambers (32c, 32d), said piston (32b) being secured to a substantially rigid rod (32e) connected to the hydraulic system (34).

7. The fluid plant according to any of the preceding claims, wherein the expansion system (18) is configured to allow maintaining the downstream pressure (P2) at a threshold value.

8. The fluid plant according to any of the preceding claims, comprising a metering device (20) disposed downstream of the expansion system (18) and upstream of a low-pressure fluid distribution network (14), said metering device (20) being supplied with direct current by the electricity generating system (30).

9. The fluid plant according to claim 8, comprising a high-pressure line (16a) connecting the expansion system (18) to the transport network (12) and a low-pressure line (16b) connecting the expansion system (18) to the metering device (20).

10. The fluid plant according to claim 9, wherein the electricity generating system (30) is connected to the high-pressure line (16a) and to the low-pressure line (16b).

11. The fluid plant according to any of the preceding claims, wherein said plant is a natural gas delivery plant.

12. A natural gas installation (10) comprising a high-pressure natural gas transport network (12), a distribution network (14) receiving a low-pressure natural gas and at least one natural gas plant (16) according to any of the preceding claims, connecting the transport network (12) to the distribution network (14).
